# EUROPEAN PATENT SPECIFICATION

(11) **EP 0 271 717 B1**
(45) Date of publication and mention of the grant of the patent: **29.12.1993**
(21) Application number: 87116735.9
(22) Date of filing: 12.11.1987
(51) Int. Cl.: H01B 1/10, C01G 53/11, C03C 25/02

(54) **Substrates containing electrically conducting coatings and method of producing same**
Elektrisch leitfähige Beschichtungen enthaltende Substrate und Verfahren zu ihrer Herstellung
Substrats contenant des revêtements électriquement conducteurs et méthode pour les préparer

(30) Priority: 28.11.1986 US 935888
(43) Date of publication of application: 22.06.1988
(73) Proprietor: ROCKWELL INTERNATIONAL CORPORATION, El Segundo California 90245 (US)
(72) Inventor: Warren, Leslie F., Camarillo, CA 93010 (US)
(74) Representative: Wagner, Karl H., Dipl.-Ing.

(56) References cited:
- US-A- 3 533 918
- CHEMICAL ABSTRACTS, vol. 105, no. 14, 6th October 1986, page 44, abstract no. 116057q, Columbus, Ohio, US; I.I. STAVNITSER: "Metal sulfide coatings"; & PLAST. MASSY 1986, (7), 63

## Description

### BACKGROUND OF THE INVENTION

This invention relates to electrically conducting materials, and is particularly directed to dielectric substrates containing an inorganic conductive coating having high temperature stability, and to a process for the preparation of such articles.

Existing stable organic conducting polymer systems, e.g., polypyrrole, have been found highly useful for production of conductive structural composites, particularly in the aircraft industry. While the processing features of polypyrrole for large scale applications have been found excellent, such conductive polymers have exhibited electrical instability at temperatures greater than 204° C (400° F). Advanced aircraft designs which may incorporate these materials can require such temperatures to cure resins, such as epoxies and bismaleimides, used for encapsulating or forming conductive composites with such conductive material, such as polypyrrole.

Electrically conducting copper sulfide coatings on substrates are known. Thus, EP-A-160,406, published November 6, 1985, discloses electrically conductive cupric sulfide coated polymers, prepared by treating polymers, such as acrylic fabric; with an aqueous solution containing cupric sulfate and sodium thiosulfate to form an electrically conductive cuprous sulfide layer. The cloth is then sulfurized in a toluene solution of sulfur containing butylamine.

Japanese Application No. 83/240,918, published December 22, 1983, discloses conductive fibers coated and/or filled with CuS. Thus, acrylonitrile-methylmethacrylate-sodium styrenesulfonate copolymer fibers were soaked in aqueous cupric sulfate-sodium thiosulfate solution and heated at 95° C. to give fibers coated with CuS.

U. S.-A-3,533,918 discloses an electrode for a fuel cell by wetting a cloth such as nylon with an aqueous solution of a soluble nickel salt such as nickel sulfate, and after drying, the cloth is treated as by dipping with a solution of an alkali sulphide such as sodium sulphide, to form a coating of nickel sulphide on the substrate. In lieu of alkali sulphide to produce the soluble nickel sulphide, a solution of sodium thiosulphate can be employed. However, in this case, in order to effect conversion, drying and exposure to heat are required, and the obtainment of an electrically complete, uniform coating is considerably more difficult than with alkali sulphide solution.

It is known that nickel sulfide can be precipitated by boiling a nickel salt solution with sodium thiosulfate.

An object of the present invention is the production of dielectric substrates, such as fiberglass cloth, containing an electrically conductive inorganic coating having electrical stability at high temperatures, and the provision of a process for producing such electrically conductive substrates.

Another object is the preparation of dielectric substrates, e.g., of structural fabrics, such as fiberglass cloth, containing an inorganic electrically conductive coating having good adhesion to the substrate, and having good electrically conductivity, and which can be applied to the substrate using large scale applications and simple processing techniques.

### SUMMARY OF THE INVENTION

The above objects are achieved and an electrically conductive article is produced, according to the invention, comprising a dielectric substrate, which is preferably porous, and an electrically conductive layer of nickel sulfide, by a process which comprises contacting such dielectric substrate with an aqueous solution containing a soluble nickel salt capable of being converted to nickel sulfide, and a sulfur donor, such as sodium thiosulfate, drying the resulting wet substrate, and heating the resulting substrate at elevated temperature ranging from 100° C. to 400° C.

The substrate, e.g., fiberglass cloth, is sized with a compound which provides a hydrophilic group being a surface bound pendant amino or mercapto group, which attaches to the nickel ions during aqueous solution treatment, resulting in a highly adherent coating of nickel sulfide on the substrate.

According to a preferred embodiment, the dielectric substrate employed is fiberglass cloth, and the reagents of the aqueous treating solution are nickel sulfate and sodium thiosulfate.

According to another feature of the invention, it has been found that a higher conversion of the nickel salt to nickel sulfide is obtained if ammonia is added to the aqueous treating bath to raise the pH of the bath to 7 to 10.

The resulting substrate, e.g., fiberglass cloth, coated with the electrically conducting nickel sulfide coating, can be encapsulated or laminated with high temperature curing resins, such as epoxy or bismaleimide, to produce structural electrically conducting composites.

It has been found that nickel sulfide based material is readily applied, particularly to structural fabrics, such as fiberglass cloth, using simple techniques, such as roller processing. Deposit adhesion of the nickel sulfide is surprisingly good, and the nickel sulfide coating produced by the invention process has good conductivity. Further, electrical response shows no degradation during resin, e.g., epoxy or bismaleimide, composite fabrication, or by exposure to temperatures as high as 316° C (600° F). Such features render the nickel sulfide coated substrates of the invention extremely attractive for the production of advanced structural composites used in aerospace.

### DETAILED DESCRIPTION OF THE INVENTION AND THE PREFERRED EMBODIMENTS

According to the invention, a dielectric or electrically insulating material, and which is preferably porous, that is, it possesses voids or interstices, is dipped into an aqueous solution containing a soluble nickel salt capable of being converted to nickel sulfide, and a sulfur donor.

In carrying out the invention process, porous dielectrics or electrically insulating structural materials can be used, such as a porous ceramic, a porous glass, e.g., a frit, a porous or reticulated organic foam, e.g., polyurethane, or other polymers, such as polyethers and polyalcohols, a fabric, which can be woven or non-woven, such as an inorganic fabric, e.g., fiberglass fabric, a mixed oxide fabric, such as alumina/silica/boria fabric, e.g., Nextel, or the silicon carbide fabric marketed as Nicalon, or a synthetic organic fabric, e.g., an aromatic polyamide fabric, such as the fabric marketed as Kevlar, a polyester, such as Dacron cloth or Mylar, or a polyimide, such as the material marketed as Kapton. The insulating material can vary in thickness, usually from about 0.051 mm to about 0.381 mm (2 to 15 mils).

It will also be understood that the substrate alternatively can be in the form of a fiber, e.g., a glass fiber or Nicalon fiber, to which a nickel sulfide layer is applied, according to the invention. Such coated fibers can then be formed into a tape or cloth fabric containing the nickel sulfide coating.

As an important feature of the invention, it has been found that sizing of the dielectric substrate, such as fiberglass fabric, by treatment with sizing agents which contain a hydrophilic group, providing a pendant amino or mercapto group in the substrate, enhances adherence of the nickel sulfide coating to the substrate. Examples of sizing agents for this purpose include 3-aminopropyl triethoxy silane, 3-mercaptopropyl trimethoxy silane, and [3-(trimethoxysilyl) propyl] ethylene diamine. These sizing agents form surface-bound pendant amino or mercapto groups which attach or coordinate nickel ions to provide nucleation sites for nickel sulfide deposition. A fiberglass fabric supplied with an "aminosilane finish", i.e., the bare fabric has been treated with an organosilane sizing reagent containing a pendant amino functionality, is marketed as 7781 fiberglass fabric or 7781 Uniglass. The dielectric fabric marketed as Nicalon can contain strongly nickel complexing mercapto (-SH) and diamine (-NH₂) functionalities.

The nickel salt employed in the aqueous treating solution is preferably nickel sulfate. However, other soluble nickel salts, such as nickel chloride, nickel acetate, nickel nitrate, nickel tetrafluoroborate, and the like, can also be employed. The concentration of the nickel salt, e.g., nickel sulfate, in the aqueous treating solution can vary and can range from 0.05 to 2, preferably 0.1 to 1, mol/ℓ.

The sulfur donor or sulfur releasable substance is preferably a soluble thiosulfate, e.g., an alkali metal thiosulfate, particularly sodium thiosulfate. However, other sulfur donor or sulfur releasable substances which can be employed include other alkali metal thiosulfates, such as potassium thiosulfate and ammonium thiosulfate, thioacetamide, thiophosphate salts, such as the alkali metal thiophosphates, e.g., sodium thiophosphate, ammonium thiophosphate and thiourea. The concentration of sulfur donor in the aqueous treating solution can vary but is generally within the same range of concentration, i.e., 0.05 to 2, preferably 0.1 to 1, mol/ℓ, as the concentration of the nickel salt. However, within the above-noted ranges, the concentration of sulfur donor employed in the aqueous solution can be the same as or different from the concentration of the nickel salt. In preferred practice, an aqueous solution, which is one molar in each the nickel salt and the sulfur donor, is used.

It is noted that an aqueous solution of the sodium salt, e.g., NiSO₄, and the sulfur donor, e.g., Na₂S₂O₃, is preferably employed. Use of organic solvents, such as methanol, is not preferred, particularly from the standpoint of dissolving sufficient quantities of one or the other of the reagents.

The pH of the above aqueous treating solution is usually about 5, and the use of such aqueous treating solution results in the deposition of nickel sulfide layers on the substrate, which have good electrical conductivity. However, according to a further feature of the invention, it has been found that higher conversions of the nickel salt to nickel sulfide, and thicker nickel sulfide coatings, can be obtained, according to the invention, by adding ammonia, e.g., in the form of concentrated ammonium hydroxide, to the aqueous treating solution in an amount sufficient to raise the pH of the aqueous solution to 7 to 10.

However, when employing nickel acetate as the nickel salt, it has been found that higher nickel sulfide loadings can be obtained with or without raising the pH, as noted above.

The aqueous treating solution is maintained at about ambient temperature during treatment of the dielectric substrate, e.g., fiberglass cloth, therein. The substrate is maintained or treated with the aqueous solution for a time sufficient to wet the dielectric substance with the aqueous solution. The wet dielectric substrate, e.g., the wet fiberglass cloth, is then air-dried, usually at ambient temperature, as by blowing on the wet substrate with a fan, e.g., for a period of 5 to 10 minutes. It is not necessary that the treated substrate be completely dried. It can be partially air-dried so that the substrate still contains some water before being subjected to the subsequent high temperature treatment. Hence, the substrate can still be damp or wet to the touch following the drying step. Such drying is carried out for a period of time such as to avoid any appreciable development of an insulating or low conductivity form of nickel sulfide, prior to the subsequent high temperature heating step. Thus, the term "drying" as employed herein can denote partial drying, as well as more complete drying, so long as the above detrimental formation of law conductivity nickel sulfide is avoided during such drying step.

The resulting dried substrate is then heated at a temperature and for a time sufficient to "develop" black nickel sulfide onto the dielectric substrate, e.g., onto the fibers of a fabric substrate, such as fiberglass cloth. Such elevated heating step is generally carried out in an oven at a temperature ranging from 100° C. to 400° C., preferably 110° C. to 320° C. Below 100° C., and down to room temperature, as during the previous drying step, the black deposits which form are electrically non-conducting or are of very low conductivity, and presumed to be primarily Ni(OH)S. The period of heating can range from 30 seconds up to 1 hour, usually about 2 to 30 minutes. The higher the heating temperature, the shorter the time required for completion of the reaction to form the nickel sulfide deposit. The heating step "develops" black electrically conductive nickel sulfide onto the dielectric substrate according to the following reaction:

NiSO₄ + Na₂S₂O₃ + H₂O → NiS + H₂SO₄ + Na₂SO₄

.

According to the present invention, it is seen that the reaction between the nickel salt and sulfur donor to produce conductive nickel sulfide does not occur during treatment of the dielectric substrate in the aqueous solution of such reagents but, rather, occurs subsequently during the heating step, between such reagents deposited on the substrate, under substantially anhydrous conditions and under the elevated temperatures noted above. Thus, in effect, according to the present invention, the above reaction is localized onto the surface of a substrate. This differentiates markedly from the above-noted known reaction for precipitating nickel sulfide in a boiling aqueous solution of a nickel salt containing sodium thiosulfate.

Reaction by-products following the above heating step can be removed by washing the nickel sulfide coated dielectric substrate with water. The nickel sulfide layer deposit is formulated as NiSₓ rather than pure NiS, due to its apparently polymeric nature. It has been observed, for example that in one form, the nickel sulfide is essentially amorphous but with some crystalline characteristics, and deposits uniformly on the dielectric substrate and wraps around each fiber of the substrate, or each fiber of the cloth, where the substrate is a fabric, such as fiberglass fabric. The resultant dielectric substrate contains an adherent, stable black coating of electrically conductive nickel sulfide, which imparts a sheet resistivity to the substrate material, which can range from 10 to 10,000 ohms per square, and for higher conductivity applications can range from 100 to 15 ohms per square. The term "ohms per square" is defined as the bulk resistivity of the sample in ohms x cm divided by the thickness in cm. Sheet resistivity is proportional to the reciprocal of electrical conductivity. The amount of nickel sulfide formed can vary but is usually present in an amount of 0.1 to 2%, by weight.

The resulting conductive structural materials are stable to advanced composite processing. The term "advanced composite processing" refers to further processing of the dielectric substrate containing the conductive nickel sulfide layer or coating at high temperatures while the conductivity of the coating remains stable at such high temperatures. Thus, the nickel sulfide coated dielectric articles of the invention can be subjected to encapsulation or lamination with resins, such as an epoxy or bismaleimide resin, at elevated temperatures of the order of about 177° C (350° F). without electrical conductivity degradation of the nickel sulfide coating. It has been found that when the nickel sulfide coated dielectric materials of the invention are subjected to temperatures of about 316° C (600° F.) in an inert argon or air atmosphere, the electrical response of the nickel sulfide coated dielectric, e.g., fabric, remained stable.

Further, the nickel sulfide coating on the dielectric substance produced according to the invention has a non-parasitic condition associated with it, that is, the composite has load bearing characteristics, and the conductive coating forms an integral part of the load bearing structure.

As previously noted, the dielectric material, e.g., fiberglass fabric, coated with the conductive nickel sulfide, can be encapsulated in an elevated or high temperature curing resin, such as an epoxy or bismaleimide resin, and such encapsulation further stabilizes the electrical characteristics of the nickel sulfide deposit. The encapsulation can be carried out by painting or coating the conductive substrate with the resin, or by dipping such substrate in the resin. Following coating with the encapsulating resin, the resulting system can be cured using standard curing techniques. Thus, for example, the nickel sulfide coated substrate can be painted with an epoxy resin, such as Shell's Epon 9102 epoxy resin, and a curing agent, and subjected to curing at elevated temperature between 160° C and 177° C (320° F. and 350° F.) and elevated pressure, e.g., 10.34 bar (150 psi), resulting in a laminate exhibiting good electrical and mechanical properties.

To increase the conductivity of the nickel sulfide-coated dielectric substrate, additional or repeated treatments of such nickel sulfide-coated fabric, for example, a fabric, such as fiberglass fabric, with the aqueous solution of nickel salt and sulfur donor, followed by heating at elevated temperature, can be carried cut. Hence, the conductivity of the nickel sulfide coated substrate can be adjusted by the number of such treatments, as well as by varying the concentrations of the nickel salt, e.g., NiSO₄, and sulfur donor, e.g., Na₂S₂O₃.

The following are examples of practice of the invention.

### EXAMPLE 1 (Comparative)

A fiberglass cloth (7781 Uniglass) was treated in an aqueous solution of NiSO₄ and Na₂S₂O₃, each at a concentration of 1 mol/ℓ. The wet cloth was partially air-dried at ambient temperature by blowing the material with a fan for about 5 - 10 minutes. The partially dried cloth was placed in an oven at 100° C. for 30 minutes. The resulting cloth contained an adherent, stable black coating of electrically conductive nickel sulfide which imparted a sheet resistivity of 300 ohms/square to the material, compared with an infinite resistivity for the untreated fiberglass cloth.

### EXAMPLE 2 (Comparative)

A fiberglass fabric coupon (7781 Uniglass) was dipped into aqueous 1 M each of NiSO₄ and Na₂S₂O₃. The sample was air-dried and heated in an oven at 120° C. for 5 minutes. The heating step "developed" black conductive nickel sulfide onto the fibers of the cloth.

Reaction by-products were removed by washing the material with water. Adhesion of the deposit on the fiberglass was at least as good as that of the organic conducting polymer, polypyrrole. Conductivity levels corresponding to as little as 50 ohms/square were measured with a two-probe ohmeter. The nickel sulfide deposit was found to be of an apparent polymeric nature, in the form of NiSₓ.

Encapsulation in an epoxy or bismaleimide resin further stabilized the nickel sulfide electrically conductive deposit. No conductivity loss occurred during the resin processing, even at temperatures as high as 246° C (475° F.) used for bismaleimide post-curing. At 316° C (600° F.) in air or in an inert argon atmosphere, the electrical response of the unencapsulated nickel sulfide coated fabric was still stable.

### EXAMPLE 3 (Comparative)

A 4" x 4" swatch of 7781 fiberglass was soaked in an aqueous solution containing NiSO₄, 1 M, and Na₂S₂O₃, 1 M for 5 minutes. The fabric was removed and air-dried at room temperature with a small fan, taking about 5 minutes. At this point, when the edges of the cloth began to darken, the cloth was hung on a rack and placed in an oven at 200° C. for 5 minutes. The sample, now black with the nickel sulfide deposit, was washed with room temperature water, rinsed with acetone, and dried in an oven at 200° C. for 5 minutes. The measured sheet resistivity was 20 ohms/square.

### EXAMPLE 4 (Comparative)

Using the procedure in Example 3, an aqueous solution containing 0.7 M each of NiSO₄ and Na₂S₂O₃ generated a sample with a sheet resistivity of 55 ohms/square.

### EXAMPLE 5 (Comparative)

Using the procedure in Example 3, an aqueous solution containing 0.5 M each of NiSO₄ and Na₂S₂O₃ generated a sample with a sheet resistivity of 450 ohms/square. A second treatment of the nickel sulfide-coated fabric with the same solution, followed by elevated temperature heat treatment, gave a sheet resistivity of 225 ohms/square.

### EXAMPLE 6 (Comparative)

Using the procedure in Example 3, an aqueous solution containing 0.5 M each of NiSO₄ and Na₂S₂O₃ adjusted to a pH of 10 with concentrated ammonium hydroxide generated a sample with a sheet resistivity of 35 ohms/square.

### EXAMPLE 7 (Comparative)

Using the procedure in Example 3, an aqueous solution containing 0.25 M each of NiSO₄ and Na₂S₂O₃ adjusted to a pH of 10 with concentrated ammonium hydroxide generated a sample with a sheet resistivity of 300 ohms/square.

### EXAMPLE 8 (Comparative)

The procedure of Example 3 was essentially followed, using an aqueous solution containing nickel acetate, 0.5 mol/ℓ, and sodium thiosulfate, 0.5 mol/ℓ. The measured sheet resistivity was 40 ohms/square.

### EXAMPLE 9 (Comparative)

Nickel acetate tetrahydrate, 5 g, and thioacetamide, 1.5 g, in 75 ml of methanol was used to treat a 3" x 3" swatch of 7781 fiberglass. The air-dried sample was heat-treated at 120° C. for 10 minutes, washed with water and acetone, and oven-dried. The black treated fabric showed no conductivity with an ohmeter.

### EXAMPLE 10 (Comparative)

Using nickel chloride, nickel tetrafluoroborate, or nickel sulfate according to the procedure of Example 9 produced only light deposits of NiSₓ, and the measured sheet resistivities were high, about 10⁵ to 10⁶ ohms/square.

### EXAMPLE 11 (Comparative)

Using the procedure in Example 3, an aqueous solution containing 1 M each of NiCl₂ and Na₂S₂O₃ with a heat treatment of 130° C. for 10 minutes generated a sample with a sheet resistivity of 300 ohms/square. A second treatment in the same solution gave 60 ohms/square.

### EXAMPLE 12 (Comparative)

The procedure of Example 3 was essentially followed, using nickel chloride, 0.5 mol/ℓ, and sodium thiosulfate, 0.5 mol/ℓ. The measured sheet resistivity was 160 ohms/square.

### EXAMPLE 13 (Comparative)

A 3" x 3" swatch of unsized Nicalon fabric, a trademark of Dow Corning, was treated with an aqueous solution of 1 M each NiCl₂ and Na₂S₂O₃ and heat treated at 130° C. for 10 minutes. After washing and drying, the sample had a sheet resistivity of 17000 ohms/square.

### EXAMPLE 14 (Inventive)

A 3" x 3" swatch of unsized Nicalon fabric was treated with a 1% aqueous solution of the diamine silane reagent, H₂N(CH₂)₂NH(CH₂)₃Si(OCH₃)₃, rinsed with water, and dried at 100° C. for 10 minutes. This sample was then treated as in Example 13 to give a cloth with a sheet resistivity of 2000 ohms/square.

### EXAMPLE 15 (Comparative) a 4" x 4" swatch of Kevlar fabric was treated with a 0.25 M each solution of NiSO₄ and Na₂S₂O₃ adjusted to a pH of 10 with concentrated ammonium hydroxide as in Example 6 with a heat treatment temperature of 260° C. The resulting sheet resistivity measured 1000 ohms/square; after a second treatment under the same conditions, the reading was 800 ohms/square.

The following is an example of encapsulation of the nickel sulfide coated substrates of the invention with a resin.

### EXAMPLE 16 (Comparative)

Three 6" x 6" swatches of nickel sulfide-coated fiberglass, net weight 21.08 g., net sheet resistivity 41 ohms/square, were painted with 27.4 g. of U. S. Polymeric 388D bismaleimide resin solution (26 g. solid/40 g. solution). The individual samples were pre-cured in a vacuum oven at 130° C. for 45 minutes. They were then laminated together in a hydraulic press using standard vacuum bag procedures. The cure cycle used involved heating to 177° C. and holding for 2 hours at 6.89 bar (100 psi). A post-cure followed in which the sample was heated in an oven at 227° C. for 4 hours. The resin content of the resulting laminate was 28%, and it had a sheet resistivity of 28 ohms/square.

Instead of employing a dipping or immersion procedure for treating the dielectric substrate with the aqueous solution of nickel salt and sulfur donor, such treatment can alternatively be carried out by wetting or applying such solution to the substrate by means of a liquid dispenser, as by spraying or brushing the aqueous solution onto the substrate surface. Further, especially in the case of long sheets of substrate, a roller coating procedure for applying the aqueous treating solution to the substrate surface is particularly useful. Thus, 30.5 m (100 foot) rolls of 30.5 cm (12 inch) fiberglass have been successfully treated with the aqueous treating solution and heated at elevated temperature according to the invention, using a simple roller unit and quartz strip heaters.

The conductive nickel sulfide materials produced according to the invention have application as conductive composite structural materials, resistive heating elements, semi-conductor components, in anti-static applications, in electromagnetic interference shielding applications, and as electrical conductors.

From the foregoing, it is seen that the present invention provides novel electrically conductive materials containing a readily processible inorganic conductive coating of nickel sulfide, having good conductivity, and which is chemically stable and resistant to degradation of its electrical characteristics at high temperatures, and which is amenable to the production of electrically conductive composite materials by encapsulation or lamination with resins, such as epoxies, at high temperatures.

## Claims

1. An electrically conductive article comprising a dielectric substrate and an electrically conductive layer consisting essentially of nickel sulfide, said substrate containing a hydrophilic sizing group attached to said nickel sulfide, said hydrophilic group being a surface bound pendant amino or mercapto group.

2. The electrically conductive article of claim 1 said substrate being a fabric selected from the group consisting of fiberglass fabric, mixed oxide fabric, silicon carbide fabric, and a synthetic organic fabric.

3. The electrically conductive article of claim 2, said substrate being fiberglass fabric.

4. The electrically conductive article of claim 2, the amount of nickel sulfide adhered to said substrate ranging from 0.1 to 2%, by weight.

5. The electrically conductive article of claim 2 encapsulated in an elevated temperature curing resin.

6. The electrically conductive article of claim 5 encapsulated in a resin selected from the group consisting of epoxy and bismaleimide resins.

7. The electrically conductive article of anyone of claims 1-6 said substrate being in the form of a fiber.

8. A process for producing an electrically conductive article which comprises:
contacting a dielectric substrate which contains a hydrophilic sizing group being a surface-bound pendant amino or mercapto group, as in claim 1, with a solution containing a soluble nickel salt capable of being converted to nickel sulfide, said soluble nickel salt selected from the group consisting of nickel sulfate, nickel chloride, nickel acetate, nickel nitrate and nickel tetrafluoroborate, and a sulfur donor, said sulfur donor being a sulfur releasable substance select from the group consisting of alkali metal and ammonium thiosulfates, alkali metal and ammonium thiophosphates, thiourea, and thioacetamide,
drying the resulting wet substrate for such a time as to avoid any appreciable development of an insulating or low conductivity form of nickel sulfide, and
heating the resulting substrate under substantially anhydrous conditions at an elevated temperature ranging from 100° C. to 400° C. and reacting said nickel salt and said sulfur donor to form an electrically conductive coating of nickel sulfide on said substrate, said hydrophilic sizing group being attached to said nickel sulfide.

9. The process of claim 8, wherein said solution is an aqueous solution.

10. The process of claim 9, said substrate being a porous substrate selected from the group consisting of porous organic polymers and foams, organic and inorganic fabrics, porous glass and porous ceramics.

11. The process of claim 9, said soluble nickel salt being nickel sulfate and said sulfur donor being sodium thiosulfate.

12. The process of claim 9, the nickel salt concentration ranging from 0.05 to 2 mol/ℓ, and the sulfur donor concentration ranging from 0.05 to 2 mol/ℓ.

13. The process of claim 9, said aqueous solution being 1 molar in each the nickel salt and the suflur donor.

14. The process of claim 9, said aqueous solution containing NH₃ in amount sufficient to maintain the pH of said solution at 7 to 10.

15. The process of claim 9, said aqueous solution being at about ambient temperature, and said drying of the wet substrate taking place at about ambient temperature and for a time such as to avoid any appreciable development of an insulating or low conductivity form of nickel sulfide.

16. A process for producing an electrically conductive article which comprises:
contacting a dielectric substrate which contains a hydrophilic sizing group comprising a surface-bound pendant amino or mercapto group, as in claim 1, and which is in the form of a fabric selected from the group consisting of fiberglass fabric, mixed oxide fabric, silicon carbide fabric, and a synthetic organic fabric, with an aqueous solution containing (1) a nickel salt selected from the group consisting of nickel sulfate, nickel chloride, nickel acetate, nickel nitrate, and nickel tetrafluoroborate, and (2) a sulfur donor selected from the group consisting of sodium thiosulfate, sodium thiophosphate, thiourea and thioacetamide, drying the resulting wet substrate at about ambient temperature and for a time such as to avoid any appreciable development of an insulating or low conductivity form of nickel sulfide, and
heating the resulting substrate at elevated temperature ranging from about 110°C to about 320°C to form an electrically conductive coating of nickel sulfide on said substrate, said hydrophilic sizing group being attached to said nickel sulfide.

17. The process of claim 16, said nickel salt being nickel sulfate and said sulfur donor being sodium thiosulfate.

18. The process of claim 17, the nickel salt concentration ranging from 0.1 to 1 mol/ℓ, and the sulfur donor concentration ranging from 0.1 to 1 mol/ℓ.

19. The process of claim 18, said aqueous solution containing NH₃ in amount sufficient to maintain the pH of said solution at 7 to 10.

20. The process of claim 19, said dielectric substrate being fiberglass fabric.

21. The process of claim 19, said dielectric substrate being silicon carbide fabric.

22. The process of claim 19, including repeating the steps of treatment of said substrate containing said nickel sulfide coating with said aqueous solution and of heating the resulting substrate at said elevated temperature.

## Patentansprüche

1. Elektrisch leitender Gegenstand, der ein dielektrisches Substrat und eine elektrisch leitende Schicht aufweist, die im wesentlichen aus Nickelsulfid besteht, wobei das Substrat eine hydrophile Haftgruppe enthält, die an dem Nickelsulfid haftet, wobei die hydrophile Gruppe eine an der Oberfläche gebundene abstehende Amino- oder Mercaptogruppe ist.

2. Elektrisch leitender Gegenstand nach Anspruch 1, wobei das Substrat ein Stoff oder Gewebe ist, ausgewählt aus der Gruppe, die aus Glasfaser- oder Fiberglasstoff, Mischoxidstoff, Siliciumcarbidstoff und einem synthetischen organischen Stoff besteht.

3. Elektrisch leitender Gegenstand gemäß Anspruch 2, wobei das Substrat ein Glasfaser- oder Fiberglasstoff ist.

4. Elektrisch leitender Gegenstand gemäß Anspruch 2, wobei die Menge des Nickelsulfids, die an dem Substrat haftet, im Bereich von 0,1 bis 2 Gew.% ist.

5. Elektrisch leitender Gegenstand gemäß Anspruch 2, der in einem bei erhöhter Temperatur gehärteten Harz eingekapselt ist.

6. Elektrisch leitender Gegenstand gemäß Anspruch 5, der in ein Harz eingekapselt ist, das aus der Gruppe ausgewählt ist, welche Epoxid- und Bismaleimidharze umfaßt.

7. Elektrisch leitender Gegenstand nach einem der Ansprüche 1 bis 6, wobei das Substrat die Form einer Faser besitzt.

8. Verfahren zum Herstellen eines elektrisch leitenden Gegenstandes, wobei das Verfahren folgendes aufweist:
Bringen eines dielektrischen Substrats, das eine hydrophile Haftgruppe enthält, die eine an der Oberfläche gebundene abstehende Amino- oder Mercaptogruppe gemäß Anspruch 1 ist, in Kontakt mit einer Lösung, die ein lösliches Nickelsalz, das in Nickelsulfid umgewandelt werden kann, wobei das lösliche Nickelsalz ausgewählt ist aus der Gruppe, die aus Nickelsulfat, Nickelchlorid, Nickelacetat, Nickelnitrat und Nickeltetrafluorborat besteht, und einen Schwefeldonor enthält, wobei der Schwefeldonor eine Substanz ist, die Schwefel freigeben kann und aus der Gruppe ausgewählt ist, die aus Alkalimetall- und Ammoniumthiosulfaten, Alkalimetall- und Ammoniumthiophosphaten, Thiocarbamid bzw. Schwefelharnstoff, und Thioacetamid besteht,
Trocknen des sich ergebenden nassen Substrats für eine Zeit, um jegliche merkbare Entwicklung einer isolierenden oder eine niedrige Leitfähigkeit besitzenden Form von Nickelsulfid zu vermeiden, und
Erwärmen des sich ergebenden Substrats unter im wesentlichen wasserfreien Bedingungen bei einer erhöhten Temperatur im Bereich von 100 °C bis 400 °C, und Reagierenlassen des Nickelsalzes mit dem Schwefeldonor, um einen elektrisch leitenden Überzug aus Nickelsulfid auf dem Substrat zu bilden, wobei die hydrophile Haftgruppe an dem Nickelsulfid haftet.

9. Verfahren gemäß Anspruch 8, wobei die Lösung eine wäßrige Lösung ist.

10. Verfahren gemäß Ansprsuch 9, wobei das Substrat ein poröses Substrat ist, das ausgewählt ist aus der Gruppe, die aus porösen organischen Polymeren und Schäumen, organischen und anorganischen Stoffen, porösem Glas und porösen Keramiken besteht.

11. Verfahren gemäß Anspruch 9, wobei das lösliche Nickelsalz Nickelsulfat ist und wobei der Schwefeldonor Natriumthiosulfat ist.

12. Verfahren gemäß Anspruch 9, wobei die Nickelsalzkonzentration im Bereich von 0,05 bis 2 mol/l ist, und wobei die Schwefeldonorkonzentration im Bereich von 0,05 bis 2 mol/l ist.

13. Verfahren gemäß Anspruch 9, wobei die wäßrige Lösung in dem Nickelsalz sowie in dem Schwefeldonor 1-molar ist.

14. Verfahren gemäß Anspruch 9, wobei die wäßrige Lösung NH₃ in einer Menge enthält, die ausreichend ist, um den pH-Wert der Lösung auf ungefähr 7 bis 10 zu halten.

15. Verfahren gemaß Anspruch 9, wobei die wäßrige Lösung ungefähr auf Umgebungstemperatur ist, und wobei das Trocknen des nassen Substrats ungefähr bei Umgebungstemperatur und für eine solche Zeit stattfindet, um jegliche merkbare Entwicklung einer isolierenden oder eine niedrige Leitfähigkeit besitzenden Form von Nickelsulfid zu vermeiden.

16. Verfahren zum Herstellen eines elektrisch leitenden Gegenstands, wobei das Verfahren folgendes aufweist:
Bringen eines dielektrischen Substrats, das eine hydrophile Haftgruppe enthält, die eine an der Oberfläche gebundene abstehende Amino- oder Mercaptogruppe gemäß Anspruch 1 aufweist, und das in der Form eines Stoffes oder Gewebes vorliegt, das ausgewählt ist aus der Gruppe, die aus Glasfaser- oder Fiberglasstoff, Mischoxidstoff, Siliciumcarbidstoff und einem synthetischen organischen Stoff besteht, in Kontakt mit einer wäßrigen Lösung, die folgendes enthält:
(1) ein Nickelsalz, ausgewählt aus der Gruppe, die aus Nickelsulfat, Nickelchlorid, Nickelacetat, Nickelnitrat und Nickeltetrafluorborat besteht, und
(2) einem Schwefeldonor, ausgewählt aus der Gruppe, die aus Natriumthiosulfat, Natriumthiophosphat, Thiocarbamid bzw. Schwefelharnstoff und Thioacetamid besteht,
Trocknen des sich ergebenden nassen Substrats ungefähr bei Umgebungstemperatur und für eine gewisse Zeit, um jegliche merkbare Entwicklung einer isolierenden oder eine niedrige Leitfähigkeit besitzenden Form von Nickelsulfid zu vermeiden, und
Erwärmen des sich ergebenden Substrats bei einer erhöhten Temperatur im Bereich von ungefähr 110 °C bis ungefähr 320 °C, um einen elektrisch leitenden Überzug aus Nickelsulfid auf dem Substrat zu bilden, wobei die hydrophile Haftgruppe an dem Nickelsulfid haftet.

17. Verfahren gemäß Anspruch 16, wobei das Nickelsalz Nickelsulfat ist, und wobei der Schwefeldonor Natriumthiosulfat ist.

18. Verfahren gemäß Anspruch 17, wobei die Nickelsalzkonzentration im Bereich von 0,01 bis 1 mol/l ist und wobei die Schwefeldonorkonzentration im Bereich von 0,1 bis 1 mol/l ist.

19. Verfahren gemäß Anspruch 18, wobei die wäßrige Lösung NH₃ in einer ausreichenden Menge enthält, um den pH-Wert der Lösung auf ungefährt 7 bis 10 zu halten.

20. Verfahren gemäß Anspruch 19, wobei das dielektrische Substrat Glasfaser- oder Fiberglasstoff ist.

21. Verfahren gemäß Anspruch 19, wobei das dielektrische Substrat Siliciumcarbidstoff ist.

22. Verfahren gemäß Anspruch 19, wobei das Verfahren die Wiederholung der folgenden Schritte umfaßt: Behandlung des Substrats, was das Überziehen mit Nickelsulfid mit der wäßrigen Lösung beinhaltet und Erwärmen des sich ergebenden Substrats bei der erhöhten Temperatur.

## Revendications

1. Article électriquement conducteur, comprenant un substrat diélectrique et une couche électriquement conductrice, consistant essentiellement en du sulfure de nickel, ledit substrat contenant, fixé audit sulfure de nickel, un groupe hydrophile de produit d'apprêtage, ledit groupe hydrophile étant un groupe amino ou mercapto pendant ou latéral, fixé à la surface du substrat.

2. Article électriquement conducteur selon la revendication 1, ledit substrat étant une étoffe choisie dans l'ensemble consistant en une étoffe de fibres de verre, une étoffe formée d'oxydes mixtes, une étoffe en carbure de silicium et une étoffe organique synthétique.

3. Article électriquement conducteur selon la revendication 2, ledit substrat étant une étoffe en fibres de verre.

4. Article électriquement conducteur selon la revendication 2, la quantité de sulfure de nickel qui adhère audit substrat se situant entre 0,1 et 2 % en poids.

5. Article électriquement conducteur selon la revendication 2, encapsulé dans une résine qui durcit à température élevée.

6. Article électriquement conducteur selon la revendication 5, encapsulé dans une résine choisie dans l'ensemble consistant en des résines époxydes et des résines de bismaléimide.

7. Article électriquement conducteur selon l'une quelconque des revendications 1 à 6, ledit substrat étant sous forme d'une fibre.

8. Procédé pour produire un article électriquement conducteur, ce procédé comprenant :
la mise en contact d'un substrat diélectrique, qui contient un groupe hydrophile de produit d'apprêtage, ce groupe étant un groupe amino ou mercapto pendant fixé à la surface, selon la revendication 1, avec une solution contenant un sel soluble de nickel capable d'être converti en du sulfure de nickel, ledit sel soluble de nickel étant choisi dans l'ensemble consistant en du sulfate de nickel, du chlorure de nickel, de l'acétate de nickel, du nitrate de nickel et du tétrafluoroborate de nickel, et un donneur de soufre, ledit donneur de soufre étant une substance pouvant libérer du soufre et qui est choisie dans l'ensemble consistant en des thiosulfates des métaux alcalins et d'ammonium, des thiophosphates de métaux alcalins et d'ammonium, de la thiourée et du thioacétamide ;
le séchage du substrat humide résultant, séchage effectué en une période de temps permettant d'éviter tout développement appréciable quelconque d'une forme de sulfure de nickel isolant ou à faible conductivité ; et
le chauffage du substrat résultant, dans des conditions essentiellement anhydres, à une température élevée comprise entre 100 °C et 400 °C, et la réaction de ce sel de nickel et de ce donneur de soufre pour former un revêtement, électriquement conducteur de sulfure de nickel sur ledit substrat, ledit groupe hydrophile du produit d'apprêtage étant fixé sur ce sulfure de nickel.

9. Procédé selon la revendication 8, dans lequel ladite solution est une solution aqueuse.

10. Procédé selon la revendication 9, ledit substrat étant un substrat poreux choisi dans l'ensemble consistant en des polymères organiques poreux et des mousses poreuses, des étoffes organiques et minérales, du verre poreux et des matières céramiques poreuses.

11. Procédé selon la revendication 9, ledit sel soluble de nickel étant du sulfate de nickel et ledit donneur de soufre étant du thiosulfate de sodium.

12. Procédé selon la revendication 9, la concentration en sel de nickel se situant entre 0,05 et 2 moles/l, et la concentration du donneur de soufre se situant entre 0,5 et 2 moles/litre.

13. Procédé selon la revendication 9, ladite solution aqueuse étant 1 molaire en sel de nickel et 1 molaire en donneur de soufre.

14. Procédé selon la revendication 9, ladite solution aqueuse contenant NH₃ en une quantité suffisante pour maintenir entre 7 et 10 le pH de ladite solution.

15. Procédé selon la revendication 9, ladite solution aqueuse étant au voisinage de la température ambiante et ledit séchage du substrat humide ayant lieu au voisinage de la température ambiante et pendant une période de temps permettant d'éviter tout développement appréciable éventuel d'une forme de sulfure de nickel isolante ou ayant une faible conductivité.

16. Procédé pour produire un article électriquement conducteur, ce procédé comprenant :
la mise en contact d'un substrat diélectrique, qui contient un groupe hydrophile de produit d'apprêtage comprenant un groupe amino ou mercapto pendant ou latéral lié à la surface, comme à la revendication 1, et qui a la forme d'une étoffe choisie dans l'ensemble' consistant en une étoffe en fibres de verre, une étoffe en des oxydes mixtes, une étoffe en carbure de silicium et une étoffe organique synthétique, avec une solution aqueuse contenant (1) un sel de nickel, choisi dans l'ensemble consistant en le sulfate de nickel, le chlorure de nickel, l'acétate de nickel, le nitrate de nickel et le tétrafluoroborate de nickel, et (2) un donneur de soufre choisi dans l'ensemble consistant en le thiosulfate de sodium, le thiophosphate de sodium, la thiourée et du thioacétamide,
le séchage du substrat humide résultant, au voisinage de la température ambiante et pendant une période de temps permettant d'éviter tout développement appréciable éventuel d'une forme de sulfure de nickel isolante ou à faible conductivité, et
le chauffage du substrat résultant, à une température élevée, comprise entre environ 110 °C et environ 320 °C, pour former un revêtement électriquement conducteur de sulfure de nickel sur ledit substrat, ledit groupe hydrophile de produit d'apprêtage étant fixé sur ce sulfure de nickel.

17. Procédé selon la revendication 16, ledit sel de nickel étant du sulfate de nickel et ledit donneur de soufre étant le thiosulfate de sodium.

18. Procédé selon la revendication 17, la concentration en sel de nickel se situant entre 0,1 et 1 mole/l, et la concentration en donneur de soufre se situant entre 0,1 et 1 mole/litre.

19. Procédé selon la revendication 18, ladite solution aqueuse contenant NH₃ en une quantité suffisante pour maintenir à une valeur de 7 à 10 le pH de ladite solution.

20. Procédé selon la revendication 19, ledit substrat diélectrique étant une étoffe en fibres de verre.

21. Procédé selon la revendication 19, ledit substrat diélectrique étant une étoffe en carbure de silicium.

22. Procédé selon la revendication 19, comprenant la répétition des étapes de traitement dudit substrat contenant ledit revêtement de sulfure de nickel avec ladite solution aqueuse et le chauffage du substrat résultant à ladite température élevée.
